# EUROPEAN PATENT SPECIFICATION

(11) **EP 1 685 078 B1**
(45) Date of publication and mention of the grant of the patent: **14.12.2016**
(21) Application number: 04798302.8
(22) Date of filing: 17.11.2004
(51) Int. Cl.: C04B 35/626, C04B 35/63, F27D 1/00, B22D 41/02, C04B 35/66

(54) **METHOD FOR APPLYING A COATING MASS**
VERFAHREN ZUM AUFBRINGEN EINER BESCHICHTUNGSMASSE
PROCEDE D'APPLICATION DE MATIERE DE REVETEMENT

(30) Priority: 18.11.2003 FI 20031676
(43) Date of publication of application: 02.08.2006
(73) Proprietor: Bet-Ker Oy, 84100 Ylivieska (FI)
(72) Inventor: RUOTANEN, K., BET-KER OY, FI-84100 Ylivieska (FI); MIETTINEN, M., BET-KER OY, FI-84100 Ylivieska (FI)
(74) Representative: Papula Oy
(86) International application number: PCT/FI2004/000693
(87) International publication number: WO 2005/049526

(56) References cited:
- EP-A2- 0 814 134
- GB-A- 2 012 258
- US-A- 3 830 653
- US-A- 4 149 897
- US-A- 4 760 039
- US-A- 4 778 526

## Description

### FIELD OF THE INVENTION

The invention relates to a method as defined in the preamble of claim 1 for arranging a coating mass as a coating material.

### BACKGROUND OF THE INVENTION

To protect molten metal, e.g. molten steel, from various impurities and to ensure a sufficient quality, the production, reaction and transfer vessels that come in contact with molten metal, especially at the end of the process, are coated. Strict requirements are set e.g. to the purity of steel. In particular, strict threshold values have been set e.g. to the hydrogen content of particular steels. Thus, specifically at the final stage of the production process of steel the transfer vessels of molten steel, various ladles and tundishes, must be as free as possible from impurities. The handling vessels at the end of the process must, in addition, be capable of keeping the heat content and temperature of metal sufficiently high.

Known in the prior art are several various coating compositions to be used in processing vessels that come in contact with molten metal. The coating compositions consist of various aggregates, binders and additives and water. As the binder, various hydraulic binders and resin are used, as is known. Especially resins usually contain hydrogen.

A problem with these known coatings is that they donate hydrogen to metal. In making particular special steels, e.g. tool steels, the hydrogen being released from the coating can spoil the steel to be made.

Known coating compositions can be applied to an object to be coated by injecting or applying to the walls of the object. Alternatively, the coating compositions can be applied to the object by drizzling the mass in between the object, i.e. a background coating, and a mould.

When using particular known wet injectable masses, the drying is problematic, time consuming and incurs expenses. A mass produced by wet methods cannot be applied to hot basins, due to the huge water content (25-30%) contained therein; instead the basins must be cooled either actively or passively. Furthermore, when applying a wet coating mass, the nozzles being used easily get clogged; and in cleaning the hoses mass is lost, and a sewage system and heating after the application are needed to evaporate the water from the mass. Therefore, the investment, maintenance, upkeep, energy and personnel costs are increased and the delivery cycles of the basins are prolonged. Further, due to insufficient evaporation of water, hydrogen may enter steel.

When applying a coating mass containing dry resin as the binder to a target of application by means of a mould, the mould must be heated in order that the coating hardens. Thus, the method requires a lot of energy.

Furthermore, the disadvantages of known coatings containing liquid and/or dry resin include problems associated with the safety at work, expensive equipment for metering the resin and/or hardening agents in conjunction with the application of the coating, and the logistics and spatial problems caused by chemical tanks. Moreover, a problem with the resin-based coatings is the smell, which can be due to phenol, for example. The application of resin-based coatings to hot and warm objects causes increased evaporation of the components of resin and a change in the rheology of mass, making their application difficult at high temperatures.

Moreover, a problem with some known compositions has been the fact that their heat generation has not been sufficient to achieve a bond to a cold basin, e.g. of less than 40 degrees of Celsius in the application phase. For example, the heat amounts to be obtained by hydraulic binders are insufficient in view of rapid bond formation. In coating compositions one must take into account that the amount of hydraulic binders is limited e.g. by the weakening of the fire resistance and metallurgical detriments. The weakening of the fire resistance results in that the coating gets sintered in the background coating, which makes it difficult to strip off the used coating and abrades the background coating.

A further problem with some known coatings is an overly high thermal conductivity, causing excessive sintering of the coatings, as well as cooling of the steel especially in the initial phase of steel casting. This makes the slag purity of steel weaker, i.e. adds to the amount of oxide inclusions.

A further problem with known coatings is the adherence of the binders to the mould, increasing the cost of labour and weakening the quality of the coating.

Known from publication EP 0814134 is a coating composition containing a fire-resistant aggregate mixture, a binder and possible additives, the coating composition containing as the binder, hydrous non-organic salt. A problem with the composition is the fact that it cannot be used to coat cold basins; instead the basin must be heated before applying the mass, or after the application by manually heating the mould to achieve a bond.

From publications US 4149897 and US 4778526 compositions are known which contain as the binder, hydrous or anhydrous magnesium sulphate. A problem with these compositions is an overly high thermal conductivity and the fact that their heat generation in a reaction with water is not sufficient to achieve a bond to a so-called cold object without additional heating, due to their composition components and the proportions of the components in the composition. Furthermore, known compositions are designated to be used as water-rich injection masses and as dense as possible to fix hot, even red-hot objects, not as masses to be applied by means of a mould, whereby their compositions have been optimised for injection purposes. Further, the compositions in accordance with the reference publications get sintered, preventing the use of the compositions e.g. as coatings of tundishes.

Known from publications US 4760039, US 3830653, GB 2012258 and EP 0814134 are coating composition containing a fire-resistant material mixture. The compositions may contain magnesium sulphate, such as Epsom salt. The compositions of US 4760039 and US 3830653 comprise bentonite and the composition of GB 2012258 may comprise clay, which causes sintering.

### OBJECTIVE OF THE INVENTION

The objective of the invention is to eliminate the drawbacks referred to above. One specific objective of the invention is to disclose an application method for a coating composition of process vessels to be used in the production of metals which has a sufficient heat insulation capability and which does not donate hydrogen, oxygen or other impurities to steel and which rapidly causes the formation of bonds, even when applied on top of a cold background coating. Further, the objective of the invention is to disclose an application method of a coating composition which only consumes a little energy.

### SUMMARY OF THE INVENTION

The application method of the coating mass is characterised by what has been presented in the claims.

The invention is based on applying a coating mass as a coating material to the surfaces of vessels that come in contact with molten metal. The coating mass consists of water and a dry matter composition containing a fire-resistant aggregate mixture and a binder, and the dry matter composition mainly consists of non-organic components and water has been added to the dry matter composition when applying the coating material. According to the invention, amount of water is 2-6 w-% calculated from the weight of the coating mass. In addition, the dry matter composition contains anhydrous magnesium sulphate, auxiliary binders, cyanite and non-organic aggregate or an aggregate mixture so that the dry matter composition contains, calculated from the weight of the dry matter composition, 1-3 w-% of anhydrous magnesium sulphate as the main binder, auxiliary binders, which contain hexametaphosphate, calcium silicates, calcium aluminates and/or anhydrous calcium sulphate, and amount of auxiliary binders is less than 7 w-%, cyanite as an additive and amount of cyanite is less than 6 w-%, and 85-93 w-% of non-organic aggregate or an aggregate mixture.

The coating mass preferably only contains a small water content. Preferably, the coating mass thus produced is not a sludge or a flowing mass which would substantially have a plastic flow.

A main binder is herein used to mean such a binder which has a high heat generation capacity per mass unit of the binder in its reaction with water, within about 10 minutes from the addition of water.

The substantially dry magnesium sulphate to be used as the main binder exothermally reacts with water, thereby forming sufficiently heat to achieve and accelerate the bond reactions in the coating mass. From the standpoint of the invention, it is substantial to achieve the bond as fast as possible in the application phase. Furthermore, it is substantial that one can generate heat energy as much as possible with an amount of binder as small as possible. Dry magnesium sulphate generates a lot of heat when reacting with water, e.g. at temperatures less than 50°C per amount of material used. This enables the formation of a quick bond by accelerating the other reactions in the binder phase. Therefore, the use of magnesium sulphate is substantial from the standpoint of the functioning of the coating mass in question.

Substantially dry magnesium sulphate is herein used to mean substantially anhydrous magnesium sulphate, i.e. completely anhydrous magnesium sulphate or one that contains no more than 2 water molecules as water of crystallisation (MgSo₄ 2H₂O).

In one embodiment of the invention, the dry matter composition may contain, in addition to the main binder magnesium sulphate, also other binders. Other so-called auxiliary binders may include so-called hydraulic binders, which are capable of rapid heat generation when reacting with water, or resins. In one preferred embodiment of the invention, the composition contains, as the hydraulic auxiliary binder, calcium silicates, calcium aluminates or derivatives thereof, e.g. calcium sulphoaluminates. The dry matter composition in accordance with the invention may contain resins and other organic binders only in small amounts so that the composition remains substantially non-organic. As the auxiliary binders it is possible to use also phosphate compounds, such as hexametaphosphate, which can be used to improve the quality of the surface of the coating material thus produced. As the auxiliary binder it is also possible to use anhydrous calcium sulphate. The dry matter composition contains less than 7 w-% of auxiliary binders from the mass of the composition.

In one embodiment of the invention, the dry matter composition contains, as the auxiliary binder, less than 4 w-%, more preferably ≤ 3 w-% of hexametaphosphate.

In one embodiment of the invention, the dry matter composition contains, as the auxiliary binder, less than 4 w-%, more preferably ≤ 3 w-% of cement. Preferably, as the cement one uses so-called Portland type blended cement or the like which is capable of heat generation as fast as possible when reacting with water and which is based on calcium silicates and may contain, in addition, e.g. calcium aluminates, ferrites, etc.

The dry matter composition may further comprise about 0.01-10 w-%, preferably less than 6 w-% of various additives from the mass of the composition. The dry matter composition contains less than 6 w-% of cyanite as the additive. The cyanite functions as a volume stabiliser. Other additives may include e.g. hardening agents, agents improving the quality of the surface of the coating, metallic reducers and/or organic compounds in small amounts, e.g. resins and sucrose, which improve the durability and quality of the surface of the coating composition. Suitable sucroses include e.g. fructose and/or sorbitol. Other additives include e.g. various aluminium silicates, aluminium phosphates and other sodium phosphates. In the additives it is possible to use less than 1 w-% of fibrous materials.

Magnesia, i.e. magnesium oxide, magnesite, dolomite, calcite, doloma, olivine or some other fire-resistant component or derivatives and mixtures thereof can be used as the aggregate of the dry matter composition. These materials can be natural, obtained by a combustion process or re-cycled materials. The most commonly used aggregates are magnesia and olivine. Alternatively, it is possible to use in the dry matter composition any other aggregate known in the field. Preferably, the dry matter composition contains 85-93 w-% of an aggregate mixture from the mass of the composition.

The granular size of the dry matter composition preferably is adjusted to be such that the coating mass becomes sufficiently compact by itself, whereby no vibration or other external compaction is necessarily needed. Thus, the granular size of the composition preferably is less than 6mm, preferably mainly less than 3mm. It is important that the coating mass becomes easily compact, while being at the same time sufficiently porous.

The coating mass and dry matter composition are suited for the coating of the production, reaction and transfer vessels to be used in the different processing phases of molten metal, preferably steel, generally for all those objects in which there is a reason to protect the molten metal from possible impurities. Transfer vessels are used to mean all kinds of transfer vessels, such as various tundishes, ladles, troughs and the like vessels to be used for the transfer of molten metal. Preferably, the coating mass is used as the coating material for coating the surfaces of the tundishes necessary in the production of molten steel, e.g. under continuous conditions. An insulating and sufficiently porous coating layer having the same thickness throughout is formed in the tundishes.

In the method of the invention, the coating mass is arranged as the coating material on the surface of vessels that come in contact with molten metal so that a dry matter composition is formed containing an aggregate mixture and a binder, by mixing the dry matter components with one another, and water is added to the dry matter composition in the application phase of the coating material for forming the coating mass, and the coating mass thus obtained is arranged as the coating material on the surface of an object being coated. According to the method of the invention, the dry matter composition is mainly formed from non-organic components and contains as the main binder 1-3 w-% of dry magnesium sulphate, auxiliary binders containing hexametaphosphate, calcium silicates, calcium aluminates and/or anhydrous calcium sulphate, and amount of auxiliary binders is less than 7 w-%, cyanite as an additive and amount of cyanite is less than 6 w-%, and 85-93 w-% of non-organic aggregate or an aggregate mixture as the additive, all these portions being calculated from the weight of the dry matter composition; 2-6 w-% of water is added to the dry matter composition for forming a coating mass, calculated from the weight of the coating mass; the coating mass thus produced is arranged in between the surface of the vessel and the mould placed in conjunction with it for forming a coating on the surface of the vessel; and the mould is removed after the bond formation of the coating mass.

As the mould it is possible to use any mould known in the field.

Preferably, the mould is removed after the bond formation. The application phase preferably is performed in less than an hour, more preferably in less the 30 minutes; in some embodiments even in less than 15 minutes. The mould can be vibrated in the application phase of the coating mass, when necessary.

After the removal of the mould, the coated object, i.e. a tundish, can be introduced directly into preheating or into use, or stored for preheating or introduction into use. Coated basins can be introduced into use either cold or preheated.

In one embodiment of the invention, water is mixed with the dry matter composition in a screw-type mixer.

In one embodiment of the invention, the dry matter composition and/or water to be added to the dry matter composition can be heated before adding the water to the dry matter composition. In one embodiment, the coating mass thus formed can be heated before applying the coating mass to achieve a faster bond. In one embodiment of the invention, the temperature of the coating mass is adjusted to be in the range 20-99°C, more preferably in the range 40-90°C, and most preferably in the range 60-80°C before being applied as a coating material.

Preferably, the heating of the dry matter composition, the water to be added to it or the coating mass is necessary if the temperature of the object to be heated is less than 20°C.

In the method of the invention, the coating mass can be applied to the surface of a so-called cold object to be coated that preferably has a temperature of less than 40°C, more preferably 10-40°C. The bonds of the coating mass are achieved even in a cold basin in less than 30 minutes, after which the mould can be taken off. Specifically when the object being coated is a cold one, the exothermic reactions of the binder are of importance from the standpoint of the bond time. Further alternatively, the object being coated can be a warm one, 40-100°C. Alternatively, the object being coated can be a hot one, whereby the heat of the object can be utilised in the formation of the bonds of the coating mass. The temperature of a hot object being coated can be 100-200°C without it having a detrimental effect on the success of the application.

Warm water, a warm dry matter composition and/or a heated coating mass, as well as a heated object being coated can preferably accelerate the bond time of the coating.

The thickness of the coating in accordance with the invention in the target of application preferably is at least 20mm.

### ADVANTAGES OF THE INVENTION

The method in accordance with the invention has the advantage that thanks to the main binder being used and to the composition structure, the bonds in the coating mass can be made to form quickly at the application stage of the coating material, without any specific additional heating.

The method in accordance with the invention has the advantage that the coating mass does not donate hydrogen to the steel being made. Furthermore, the aggregates of the coating mass have been selected from such fire-resistant components that under the circumstances being applied do not donate hydrogen to steel and have a sufficiently low thermal conductivity. The thermal conductivity of the coating mass being formed also is low because a mass that is very heat conductive is not suited for a coating of a tundish in steelmaking, because in that case the heat content of steel is reduced, leading to oxide crystallisation and a bad slag purity.

The granular size of the dry matter composition in accordance with the method of the invention has preferably been adjusted to be such that the coating mass becomes sufficiently compact by itself, whereby no vibration is needed.

Further, the coating material composition withstands a rather quick heating without the coating cracking or being stripped off. In addition, the coating mass composition is easy to use and inexpensive.

The invention has the advantage that the coating mass composition can be applied to a so-called cold object in which the bonds of the coating mass are quickly formed due to the exothermal nature of the binder.

Further in the method in accordance with the invention, the coating mass composition can be applied to a hot target of application without the coating composition suffering from it, enabling one to utilise the heat of the target of application with no need for separately drying the coating composition. This saves both time and expenses.

Further, the coating mass composition does not adhere to the surface of the mould, like e.g. many known alkali silicate or phosphor-rich coatings.

The coating mass composition also is user and environmentally friendly; it does not cause e.g. odour detriments or problems associated with the occupational health, like conventional resin-based masses.

A further advantage is that in the method for applying a coating mass one can use simple application equipment, because there is no need to add to the coating mass e.g. resin and/or a hardening agent at the application phase. Furthermore, the application method can be easily automated.

The coating mass composition and application method in accordance with the invention enable one to obtain a shorter application time while at the same time saving energy, space, labour costs as well as device investment and maintenance costs.

### EXAMPLES

In the following section, the invention will be described in more detail with reference to embodiment examples.

### Example 1

In the test, a coating mass composition in accordance with method of the invention was prepared, and the properties thereof were examined under laboratory conditions. In the test, a dry matter composition containing the following agents was used:

| | |
|---|---|
| As the aggregate | |
| magnesia-carbon brick rubble (0-3mm) | 15 w-% |
| impure magnesium oxide (0-3mm) | 25 w-% |
| olivine (0-1mm) | 37 w-% |
| impure magnesium oxide (<0.1mm) | 10 w-% |
| As the main binder | |
| dry magnesium sulphate (0-1mm) | 2 w-% |
| As the auxiliary binder | |
| hexametaphospate (< 1mm) | 3 w-% |
| calcium silicate cement (< 0.05mm) | |
| (so-called Portland blended cement) | 3 w-% |
| As the additive | |
| cyanite (< 0.3mm) | 5 w-% |

The weight percents have been calculated from the weight of the dry matter composition. Apart from calcium silicate, the Portland-type blended cement contains other additives, e.g. furnace slag and limestone. The Portland-type blended cement used in the test is characterised by a fast heat generation property in reaction with water.

First, a dry matter composition was formed by mixing the aggregates, the main and auxiliary binders and additives with one another. To form the coating mass, 4.0 w-% of water, from the weight of the coating mass, was added to the dry matter composition. A mould was used to form a coating wall from the coating mass according to a laboratory scale. The density, cold crushing strength and permanent change in length were determined after the treatment with heat at room temperature. Table 1 shows the results of the tests.

**Table 1**

| Temperature °C | Time H | Density g/cm³ | Cold crushing strength Mpa | Permanent change in length % |
|---|---|---|---|---|
| 20 | 24 | 2.03 | 2.6 | - |
| 110 | 24 | 1.97 | 3.1 | - |
| 1100 | 2 | 1.81 | 2.5 | +0.75 |
| 1550 | 2 | 1.99 | 5.7 | -3.89 |

As can be seen from Table 1, the cold crushing strength of the obtained coating is sufficient. In addition, the quality of the surface of the coating is good. After the treatment with heat, which can be compared to a steelmaking temperature, the coating only showed a slight tendency to a permanent change in length.

At the application phase of the coating mass, the bonds were quickly formed also in conjunction with a cold wall, quickly forming a good coating in quality.

### Example 2

In the test, a coating mass composition in accordance with method of the invention was prepared, and the properties thereof were examined under factory conditions. The coating composition was applied to the surface of a tundish of molten steel to serve as a coating. In the test, a dry matter composition corresponding to the laboratory test of Example 1 was used.

First, a dry matter composition was formed by mixing the aggregates, the main and auxiliary binders and additives with one another. To form the coating mass, 5.5 w-% of water, from the weight of the coating mass, was added to the dry matter composition in a screw-type mixer. The coating mass was applied in between the surface of the tundish and the mould using the same screw-type mixer to form a coating on the surface of the tundish. The bonds of the coating mass were made to form quickly in a cold basin. The coating of the tundish was provided with sufficient strength in keeping the mould for 30 minutes with the temperature of the background coating, i.e. the surface of the basin, being about 20°C. The mould was not vibrated during the application.

In the test, a coating was prepared from the coating mass also for a hot basin having a temperature of 60°C. While the temperature of the background coating was at its highest, the bond formation was accelerated, being less than 30 minutes.

After the different treatments with heat, the density, cold crushing strength and permanent change in length of the coating formed in the tundish were determined at room temperature. Table 2 shows the properties of the coating being formed in a cold tundish, the properties corresponding to the ones of the coating being formed in the hot tundish.

**Table 2**

| Temperature °C | Time H | Density g/cm³ | Cold crushing strength Mpa | Permanent change in length % |
|---|---|---|---|---|
| 20 | 24 | 1.80 | 1.6 | - |
| 110 | 24 | 1.73 | 1.7 | - |
| 1100 | 2 | 1.53 | 2.1 | +0.70 |
| 1550 | 2 | 1.85 | 5.0 | -3.20 |

As can be seen from Table 2, the cold crushing strength of the obtained coating is sufficient, the quality of the surface of the coating is good, and after the treatment with heat, which can be compared to a steelmaking temperature, the coating only showed a slight tendency to a permanent change in length.

The coating withstood the moving and stress caused by molten metal during the process. While in the basin, the steel showed no signs of quality problems, e.g. in the form of oxides, carbon or hydrogen. The coating was easily removed from the tundish after use.

### Example 3

A laboratory test corresponding to Example 1 was carried out for examining the coating mass composition. In this test, the dry matter composition was as follows (in percentages by weight from the dry matter composition):

| | |
|---|---|
| Aggregates | |
| impure magnesium oxide (0-3mm) | 66 w-% |
| olivine (0-1mm) | 10 w-% |
| impure magnesium oxide (<0.1mm) | 12 w-% |
| Main binder | |
| dry magnesium sulphate (0-1mm) | 1 w-% |
| Auxiliary binders | |
| hexametaphospate (< 1mm) | 2 w-% |
| calcium silicate cement (< 0.05mm) | 4 w-% |
| Additive | |
| Cyanite (< 0.3mm) | 5 w-%. |

To form the coating mass, 4 w-% of water was added to the dry matter composition from the weight of the coating mass.

When burned at 1550°C for 2 hours, the coating prepared from this coating mass got sintered a little more, due to the mutual weight ratios of the auxiliary binders.

### Comparative Example 4

A comparison laboratory test corresponding to Examples 1 and 3 was carried out for examining the coating mass so that the composition does not contain at all the main binder magnesium sulphate. In this test, the dry matter composition was as follows (in percentages by weight from the dry matter composition) :

| | |
|---|---|
| Aggregates | |
| impure magnesium oxide (0-3mm) | 78 w-% |
| impure magnesium oxide (<0.1mm) | 11 w-% |
| Main binder | |
| dry magnesium sulphate (0-1mm) | - |
| Auxiliary binders | |
| hexametaphospate (< 1mm) | 4 w-% |
| calcium silicate cement (< 0.05mm) | 2 w-% |
| Additive | |
| Cyanite (<0.3mm) | 5 w-% |

To form the coating mass, 4 w-% of water from the weight of the coating mass was added to the dry matter composition.

At the application stage of this coating mass, to form the coating, the heat and bond formation was clearly slower than in Examples 1-3, making the coating mass of this example poorly suitable especially for cold basins to be coated. The coating formed from the coating mass got sintered clearly more powerfully at the preparation temperature of steel than e.g. the coatings of Examples 1 and 2.

### Summary

The method in accordance with the invention is well suitable for coating the transfer vessels of molten steel, e.g. tundishes, whereby the bonds of the coating composition must be sufficiently sustainable, but not too strong, in order that the coating can be stripped off from the basin after use.

The invention is not limited merely to the examples referred to above; instead many variations are possible within the scope defined by the claims.

## Claims

1. A method for arranging a coating mass as a coating material on the surface of vessels that come in contact with molten steel so that a dry matter composition is formed containing a fire-resistant aggregate mixture and a binder and mainly consisting of non-organic components, by mixing the dry matter components with one another, and water is added to the dry matter composition when applying the coating material to form the coating mass, and the obtained coating mass is arranged as a coating material on the surface of an object being coated, **characterised in that** the dry matter composition contains anhydrous magnesium sulphate, auxiliary binders, cyanite and non-organic aggregate or an aggregate mixture so that the dry matter composition contains 1-3 w-% of anhydrous magnesium sulphate as the main binder, auxiliary binders containing hexametaphosphate, calcium silicates, calcium aluminates and/or anhydrous calcium sulphate and amount of auxiliary binders is less than 7 w-%, cyanite as the additive and amount of cyanite is less than 6 w-%, and 85-93 w-% of non-organic aggregate or an aggregate mixture, all the portions being calculated from the weight of the dry matter composition; 2-6 w-% of water is added to the dry matter composition to form the coating mass, calculated from the weight of the coating mass; the coating mass thus produced is arranged in between the surface of the vessel and a mould installed in conjunction with it to form a coating on the surface of the vessel; and the mould is removed after the bond formation of the coating mass.

2. The method as defined in claim 1, **characterised in that** the mould is removed after 30 minutes.

3. The method as defined in claim 1 or 2, **characterised in that** the water is mixed with the dry matter composition in a screw-type mixer.

4. The method as defined in any one of claims 1-3, **characterised in that** dry matter composition and/or the water to be added to the dry matter composition are heated prior to adding the water to the dry matter composition.

5. The method as defined in any one of claims 1-4, **characterised in that** the temperature of the coating mass is adjusted to be in the range 40-90°C prior to applying as a coating material.

6. The method as defined in any one of claims 1-5, **characterised in that** the temperature of the object being coated is less than 40°C.

7. The method as defined in any one of claims 1-5, **characterised in that** the temperature of the object being coated is in the range 40-100°C.

8. The method as defined in any one of claims 1-5, **characterised in that** the temperature of the object being coated is in the range 100-200°C.

## Patentansprüche

1. Verfahren zum Anordnen einer Beschichtungsmasse als Beschichtungsmaterial auf der Oberfläche von Gefäßen, die in Kontakt mit geschmolzenem Stahl kommen, so dass eine Trockensubstanzzusammensetzung gebildet wird, die eine feuerfeste Aggregatmischung und ein Bindemittel enthält und hauptsächlich aus nicht-organischen Komponenten besteht, indem die Trockensubstanzkomponenten miteinander gemischt werden und Wasser zu der Trockensubstanzzusammensetzung hinzugefügt wird, wenn das Beschichtungsmaterial aufgebracht wird, um die Beschichtungsmasse zu bilden, und die erhaltene Beschichtungsmasse als Beschichtungsmaterial auf der Oberfläche eines Objekts, das beschichtet wird, angeordnet wird,
**dadurch gekennzeichnet, dass**
die Trockensubstanzzusammensetzung wasserfreies Magnesiumsulfat, Hilfsbindemittel, Cyanit und ein nichtorganisches Aggregat oder eine nicht-organische Aggregatmischung enthält, so dass die Trockensubstanzzusammensetzung 1-3 Gew.-% wasserfreies Magnesiumsulfat als Hauptbindemittel, Hilfsbindemittel, enthaltend Hexametaphosphat, Calciumsilicate, Calciumaluminate und/oder wasserfreies Calciumsulfat, wobei die Menge an Hilfsbindemitteln weniger als 7 Gew.-% ist, Cyanit als das Additiv, wobei die Menge an Cyanit weniger als 6 Gew.-% ist, und 85-93 Gew.-% an nichtorganischem Aggregat oder nicht-organischer Aggregatmischung enthält, wobei die Anteile alle von dem Gewicht der Trockensubstanzzusammensetzung berechnet sind;
2-6 Gew.-% Wasser, berechnet von dem Gewicht der Beschichtungsmasse, zu der
Trockensubstanzzusammensetzung hinzugefügt werden, um die Beschichtungsmasse zu bilden;
die so hergestellte Beschichtungsmasse zwischen der Oberfläche des Gefäßes und einer Form, die in Verbindung damit installiert ist, angeordnet wird, um eine Beschichtung auf der Oberfläche des Gefäßes zu bilden; und
die Form entfernt wird, nachdem die Bindung der Beschichtungsmasse erfolgt ist.

2. Verfahren, wie in Anspruch 1 definiert, **dadurch gekennzeichnet, dass** die Form nach 30 Minuten entfernt wird.

3. Verfahren, wie in Anspruch 1 oder 2 definiert, **dadurch gekennzeichnet, dass** das Wasser mit der Trockensubstanzzusammensetzung in einem Schrauben-Mischer (screw-type mixer) gemischt wird.

4. Verfahren, wie in einem der Ansprüche 1-3 definiert, **dadurch gekennzeichnet, dass** die Trockensubstanzzusammensetzung und/oder das Wasser, das zu der Trockensubstanzzusammensetzung hinzugefügt werden soll, vor dem Hinzufügen des Wassers zu der Trockensubstanzzusammensetzung erhitzt werden.

5. Verfahren, wie in einem der Ansprüche 1-4 definiert, **dadurch gekennzeichnet, dass** die Temperatur der Beschichtungsmasse vor dem Aufbringen als ein Beschichtungsmaterial so eingestellt wird, dass sie in dem Bereich von 40-90°C ist.

6. Verfahren, wie in einem der Ansprüche 1-5 definiert, **dadurch gekennzeichnet, dass** die Temperatur des Objekts, das beschichtet wird, weniger als 40°C ist.

7. Verfahren, wie in einem der Ansprüche 1-5 definiert, **dadurch gekennzeichnet, dass** die Temperatur des Objekts, das beschichtet wird, in dem Bereich von 40-100°C ist.

8. Verfahren, wie in einem der Ansprüche 1-5 definiert, **dadurch gekennzeichnet, dass** die Temperatur des Objekts, das beschichtet wird, in dem Bereich von 100-200°C ist.

## Revendications

1. Procédé pour disposer une masse de revêtement comme matériau de revêtement sur la surface de récipients qui entre en contact avec de l'acier en fusion de sorte que soit formée une composition de matière sèche contenant un mélange d'agrégats résistants au feu et un liant, et composé principalement de composants non organiques, en mélangeant les composants de matière sèche l'un avec l'autre, et de l'eau est ajoutée à la composition de matière sèche lors de l'application du matériau de revêtement pour former la masse de revêtement, et la masse de revêtement obtenue est disposée comme matériau de revêtement sur la surface d'un objet à revêtir, **caractérisé par le fait que** la composition de matière sèche contient du sulfate de magnésium anhydre, des liants auxiliaires, du cyanite et un agrégat non organique ou un mélange d'agrégats, de sorte que la composition de matière sèche contienne de 1 à 3 % en poids de sulfate de magnésium anhydre comme liant principal, des liants auxiliaires contenant de l'hexamétaphosphate, des silicates de calcium, des aluminates de calcium et/ou du sulfate de calcium anhydre et la quantité de liants auxiliaires est inférieure à 7% en poids, du cyanite comme additif et la quantité de cyanite est inférieure à 6% en poids, et de 85 à 93% en poids d'agrégat non organique ou d'un mélange d'agrégats, toutes les portions étant calculées sur base du poids de la composition de matière sèche; de 2 à 6% en poids d'eau est ajouté à la composition de matière sèche pour former la masse de revêtement, calculé sur base du poids de la masse de revêtement; la masse de revêtement ainsi produite est disposée entre la surface du récipient et un moule installé ensemble avec cette dernière pour former un revêtement sur la surface du récipient; et le moule est retiré après la formation de la liaison de la masse de revêtement.

2. Procédé selon la revendication 1, **caractérisé par le fait que** le moule est retiré après 30 minutes.

3. Procédé selon la revendication 1 ou 2, **caractérisé par le fait que** l'eau est mélangée avec la composition de matière sèche dans un mélangeur de type à vis.

4. Procédé selon l'une quelconque des revendications 1 à 3, **caractérisé par le fait que** la composition de matière sèche et/ou l'eau à ajouter à la composition de matière sèche sont chauffées avant d'ajouter l'eau à la composition de matière sèche.

5. Procédé selon l'une quelconque des revendications 1 à 4, **caractérisé par le fait que** la température de la masse de revêtement est ajustée de manière à se situer dans la plage de 40 à 90°C avant l'application comme matériau de revêtement.

6. Procédé selon l'une quelconque des revendications 1 à 5, **caractérisé par le fait que** la température de l'objet à revêtir est inférieure à de 40°C.

7. Procédé selon l'une quelconque des revendications 1 à 5, **caractérisé par le fait que** la température de l'objet à revêtir se situe dans la plage de 40 à 100°C.

8. Procédé selon l'une quelconque des revendications 1 à 5, **caractérisé par le fait que** la température de l'objet à revêtir se situe dans la plage de 100 à 200°C.
